# EUROPÄISCHE PATENTSCHRIFT

(11) **EP 3 841 309 B1**
(45) Veröffentlichungstag und Bekanntmachung des Hinweises auf die Patenterteilung: **12.10.2022**
(21) Anmeldenummer: 19783409.6
(22) Anmeldetag: 21.08.2019
(51) Int. Cl.: F16D 13/64, F16D 69/04

(54) **REIBVORRICHTUNG**
FRICTION DEVICE
DISPOSITIF DE FRICTION

(30) Priorität: 21.08.2018 AT 507102018
(43) Veröffentlichungstag der Anmeldung: 30.06.2021
(73) Patentinhaber: Miba Frictec GmbH, 4663 Laakirchen (AT)
(72) Erfinder: MÜHLEGGER, Markus, 4812 Pinsdorf (AT)
(74) Vertreter: Burger, Hannes
(86) Internationale Anmeldenummer: PCT/AT2019/060264
(87) Internationale Veröffentlichungsnummer: WO 2020/037345

(56) Entgegenhaltungen:
- DE-A1- 10 035 518
- DE-A1- 10 154 668
- DE-A1- 10 352 427

## Beschreibung

Die Erfindung betrifft eine Reibvorrichtung mit einem Trägerelement nach Anspruch 1.

Weiter betrifft die Erfindung ein Paket aus Reibvorrichtungen umfassend in einer Axialrichtung abwechselnd angeordnete Reibvorrichtungen in Form von Außenlamellen und Innenlamellen.

Es ist bekannt, Reibbeläge für Reiblamellen von Kupplungen oder Kupplungsscheiben aus organischen Materialien, wie harzgebundenen Faserstoffen, oder anorganischen Materialien, wie Sinterwerkstoffen, herzustellen. Reibbeläge aus Sinterwerkstoffen haben gegenüber Reibbelägen aus organischen Werkstoffen den Vorteil der höheren Verschleißfestigkeit, Temperaturbeständigkeit und Reibwertkonstanz. Allerdings war es bislang nicht möglich, anorganische Reibbeläge in einem organischen Grundaufbau einer Reiblamelle oder Kupplungsscheibe, d.h. einer Reiblamelle oder Kupplungsscheibe die für die Aufnahme von organischen Reibbelägen vorgesehen ist, einzusetzen. Dies hat vor allem mit der Geometrie der jeweiligen Standardbeläge zu tun. Die derzeit üblicherweise eingesetzten Sinterreibbeläge können nicht an einem Trägerelement für organische Reibbeläge montiert werden.

Die DE 103 52 427 A1 beschreibt eine Kupplungsscheibe für eine Reibungskupplung, umfassend einen Reibbelagträger und wenigstens ein an dem Reibbelagträger zur gemeinsamen Drehung mit diesem und entgegen der Vorspannwirkung einer Rückstellanordnung in Umfangsrichtung bezüglich diesem verlagerbar verbundenes Reibbelagselement, ferner umfassend eine Reibeinrichtung, welche eine einer Verlagerung des Reibbelagselements bezüglich des Reibbelagträgers entgegenwirkende Reibkraft erzeugt.

Aus der DE 100 35 518 A1 ist eine Kupplungsscheibe mit Reibbelägen für eine Platten zum Einspannen der Reibbeläge zur Erzeugung eines Reibschlusses aufweisende Kupplung bekannt, umfassend Belagträger zur Halterung der Reibbeläge, wobei zumindest einige der Reibbeläge im montierten Zustand der Kupplungsscheibe gegenüber den Belagträger axial zu den Platten bewegbar sind, und mit Mittel zur Erfassung der Temperatur zumindest einiger der Reibbeläge und zur Steuerung der axialen Bewegung zumindest eines Teils der Reibbeläge in Abhängigkeit von deren Temperatur.

Die DE 101 54 668 A1 beschreibt eine Kupplung für ein Kraftfahrzeug mit Kupplungsscheiben und motorseitigen Mitnehmerscheiben, die zwischen einem Schwungrad und einer Kupplungsdruckplatte angeordnet und zur Erzeugung von Reibkräften durch eine Membranfeder oder durch mehrere Schraubenfedern beaufschlagbar sind, sowie mit auf den Kupplungsscheiben angeordneten Reibbelägen, die unterschiedliche Reibkoeffizienten aufweisen, sowie Mittel, um die mit unterschiedlichen Reibbelägen versehenen Kupplungsscheiben zeitversetzt in Reibkontakt mit den motorseitigen Mitnehmerscheiben zu bringen, wobei mindestens eine motorseitige Mitnehmerscheibe durch Federelemente gegenüber dem Schwungrad abgestützt ist, wobei die Federelemente der über die Kupplungsdruckplatte ausgeübten Anpresskraft entgegenwirken, so dass der Reibkontakt zuerst durch die mit einem ersten Reibbelag versehene(n) Kupplungsscheibe(n) erfolgt.

Es ist die Aufgabe der Erfindung, eine neue Verwendungsmöglichkeit eines Trägerelementes für organische Reibbeläge zu schaffen.

Die Aufgabe der Erfindung wird dadurch gelöst, dass die Reibbelagsegmente eine Winkelabdeckung zwischen 25 ° und 55 ° aufweisen, und dass in der Umfangsrichtung abwechselnd die Reibbelagsegmente und die Befestigungslaschen angeordnet sind, wobei in Überlappungsbereichen - in der Axialrichtung betrachtet - zwischen den Reibbelagsegmenten und den Befestigungslaschen die Reibbelagsegmente mit den Befestigungslaschen verbunden sind.

Weiter wird die Aufgabe der Erfindung mit dem eingangs genannten Paket aus Reibvorrichtungen gelöst, bei dem zumindest eine der Reibvorrichtungen erfindungsgemäß ausgebildet ist.

Dadurch, dass die Reibbelagsegmente eine Winkelabdeckung zwischen 25 ° und 55 ° aufweisen, ist es möglich, dass die Reibbelagsegmente an den Positionen auf dem Trägerelement befestigt werden, die für organische Reibbeläge standardmäßig vorgesehen werden. Es wird damit möglich, in serienmäßig mit organischen Reibbelägen ausgerüsteten Reibvorrichtungen bei Servicearbeiten bzw. Reparaturarbeiten an (Lamellen)Kupplungen oder Lamellenbremsen (verbrauchte) organische Reibbeläge ohne größere Probleme oder Umbauten mit neuen Sinterreibbelägen auszustatten und damit deren Vorteile auch in derartigen Kupplungen oder Bremsen zu nutzen. Durch die Winkelabdeckung können in den Sinterreibbelägen entsprechende Befestigungsstellen vorgesehen werden, die auch für die Befestigung der Reibbeläge in einem "organischen" Grundbau geeignet sind. Alternativ oder zusätzlich können die Befestigungsstellen auch so ausgebildet bzw. angeordnet werden, dass mit den Reibbelägen jeweils zwei Befestigungslaschen oder Belagfederelemente miteinander verbunden werden, wodurch die Befestigung der Reibbeläge zusätzlich eine federnde Wirkung aufweist. Es ist damit aber auch möglich, die Befestigungslaschen oder Belagfederelemente zu verkleinern wodurch Masse im Bereich des Trägerelementes zu Gunsten von mehr Masse im Bereich der Reibbeläge eingespart werden kann, wodurch die Reibbeläge eine längere Gebrauchsdauer aufweisen können.

Gemäß einer Ausführungsvariante der Reibvorrichtung kann vorgesehen sein, dass aus den Reibbelagsegmenten und den Befestigungslaschen oder Belagfederelementen durchgehendes Ringelement ausgebildet ist. Es kann damit eine Versteifung der Reibbelagsegmente erreicht werden, wobei aber eine gewisse Elastizität des gesamten Ringelementes durch die Befestigungslaschen bzw. Belagfederelemente erhalten bleibt.

Um die organischen Reibbeläge einfacher durch die Sinterreibbeläge ersetzen zu können, kann nach weiteren Ausführungsvarianten der Reibvorrichtung vorgesehen sein, dass die Reibbelagträger Befestigungslaschen aufweisen, auf denen keine Reibbeläge angeordnet sind, und/oder dass die Reibbelagträger und/oder die Reibbeläge Ausnehmungen aufweisen und/oder dass die Reibbeläge eine Flächenausdehnung aufweisen, die um zumindest 5 % kleiner ist, als die Flächenausdehnung der Reibbelagträger, jeweils in Draufsicht betrachtet und/oder dass die Reibbeläge mit in Umfangsrichtung abstehenden laschenartigen Bereichen versehen sind. Es kann damit das Massenträgheitsmoment der Sinterreibbeläge im Betrieb in Bezug auf gewünschter Lebensdauer (Verschleiß) einfacher verringert, gleich groß gestaltet oder erhöht werden, sodass das diesbezügliche Verhalten besser an jenes der organischen Reibbeläge angepasst werden kann.

Nach einer anderen Ausführungsvariante der Reibvorrichtung kann vorgesehen sein, dass die Reibbelagträger mehrere Bohrungen aufweisen, wobei zumindest eine der Bohrungen einen zu den restlichen Bohrungen unterschiedlichen Durchmesser aufweist. Es kann damit die Temperaturverteilung im Reibkontakt "gesteuert" werden, z.B. auch in Bezug auf Schädigungen wie Hot-Spots oder thermisch bedingte Oberflächenrisse oder thermisch bedingte Verformungen der Kupplungsanpressplatte oder des Schwungrades. Zudem können damit die Reibbelagselemente können einfacher an unterschiedliche Befestigungssituationen angepasst werden.

Zum besseren Verständnis der Erfindung wird diese anhand der nachfolgenden Figuren näher erläutert.

Es zeigen jeweils in vereinfachter, schematischer Darstellung:
- Fig. 1: einen Ausschnitt aus einem Paket von Reibvorrichtung in Seitenansicht;
- Fig. 2: eine nicht erfindungsgemäße Reibvorrichtung;
- Fig. 3: eine nicht erfindungsgemäße Reibvorrichtung;
- Fig. 4: eine Reibvorrichtung;
- Fig. 5: einen Ausschnitt aus einer Ausführungsvariante einer Reibvorrichtung;
- Fig. 6: eine erste Ausführungsvariante eines Reibbelagelementes;
- Fig. 7: eine zweite Ausführungsvariante eines Reibbelagelementes;
- Fig. 8: eine dritte Ausführungsvariante eines Reibbelagelementes;
- Fig. 9: eine vierte Ausführungsvariante eines Reibbelagelementes;
- Fig. 10: eine fünfte Ausführungsvariante eines Reibbelagelementes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

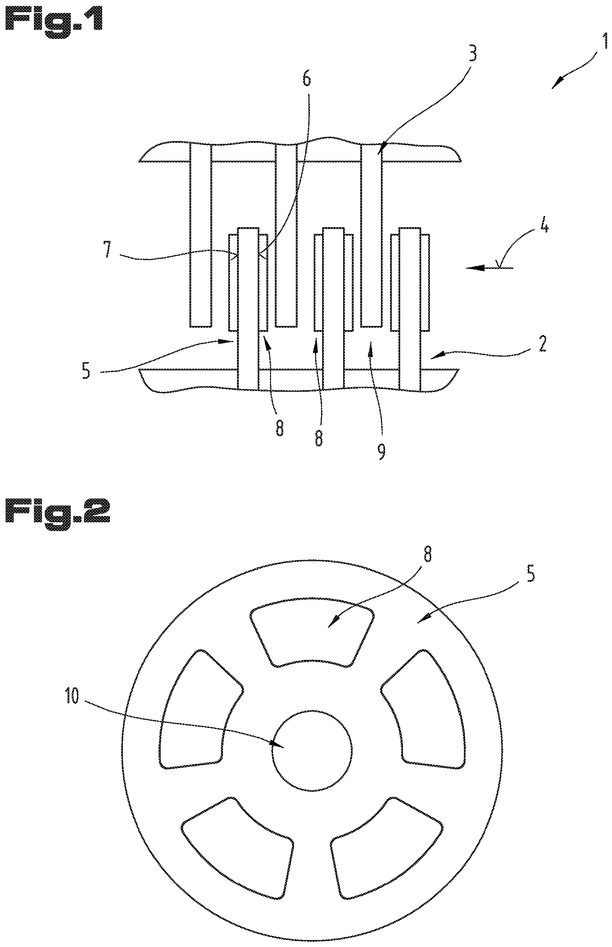

In Fig. 1 ist ein Ausschnitt aus einem Paket 1 aus Reibvorrichtungen dargestellt. Das Paket 1 weist mehrere Innenlamellen 2 und mehrere Außenlamellen 3 auf, die auch als Reibvorrichtungen bezeichnet werden können. Die Innenlamellen 2 sind in einer Axialrichtung 4 abwechselnd mit den Außenlamellen 3 angeordnet. Über einen entsprechenden Betätigungsmechanismus sind die Innenlamellen 2 relativ zu den Außenlamellen 3 in der Axialrichtung 4 verstellbar, sodass zwischen den Innenlamellen 2 und den Außenlamellen 3 ein Reibschluss ausgebildet wird.

Die Innenlamellen 2 weisen ein Trägerelement 5 auf, das zumindest teilweise als zumindest annähernd ebene, ringförmige Trägerlamelle ausgeführt sein kann. Das Trägerelement 5 weist eine erste Oberfläche 6 und eine dieser in der Axialrichtung 4 gegenüberliegende zweite Oberfläche 7 auf. Auf zumindest einer der ersten Oberfläche 6 der zweiten Oberfläche 7, vorzugsweise auf beiden, sind mehrere Reibbelagsegmente 8 angeordnet. Die Innenlamellen 2 sind in der dargestellten Ausführungsvariante also sogenannte Belaglamellen.

Die Außenlamellen 3 weisen einen Lamellenkörper 9 auf, der zumindest teilweise als ebene, zumindest annährend ringförmigen Lamelle sein kann, und der in der dargestellten Ausführungsvariante frei von Reibbelagsegmenten 8 ist. Die Außenlamellen 3 sind also die sogenannten Gegenlamellen, die in Reibschluss mit den Reibbelagsegmenten 8 der Innenlamellen 2 verbracht werden können. Es besteht aber auch die Möglichkeit, dass die Reibbelagsegmente 8 auf den Außenlamellen 3 angeordnet sind, insbesondere wenn auf den Innenlamellen 2 keine Reibbelagsegmente 8 angeordnet sind. In diesem Fall bildet der Lamellenkörper 9 ebenfalls ein Trägerelement 5.

Bevorzugt besteht das Trägerelement 5 der Innenlamellen 2 und/oder der Lamellenkörper 9 der Außenlamellen 3 aus einem Stahl bzw. umfassen diesen. Sie können jedoch auch aus einem anderen geeigneten, insbesondere metallischen, Werkstoff bestehen, beispielsweise aus einem Sinterwerkstoff.

Dieser prinzipielle Aufbau des Paketes 1 aus Reibvorrichtungen ist aus dem Stand der Technik bekannt. Zu weiteren Einzelheiten dazu sei daher auf diesen einschlägigen Stand der Technik verwiesen.

Das Paket 1 ist Teil eines (Lamellen)Reibsystems, beispielsweise einer (nasslaufenden) (Lamellen)Kupplung, einer Bremse, einer Haltevorrichtung, einer Differenzialsperre, etc..

Im Folgenden wird nur mehr die Reibvorrichtung angesprochen. Je nach Ausbildung des Pakets 1 kann diese Reibvorrichtung eine Innenlamelle 2 und/oder eine Außenlamelle 3 sein, wie dies voranstehend ausgeführt wurde.

Es sei bereits an dieser Stelle erwähnt, dass der Begriff Reibvorrichtung sowohl eine Reiblamelle an sich als auch eine Kupplungsscheibe umfasst. Daher kann also die Reibvorrichtung eine Reiblamelle oder eine Kupplungsscheibe sein.

Das Trägerelement 5 kann, wie dies die Darstellung einer nicht erfindungsgemäßen Reibvorrichtung in Fig 2 zeigt, zumindest eine ebene Scheibe sein, auf der die Reibbelagsegmente 8 befestigt sind. Die einzige Ausnehmung die das Trägerelement 5 aufweist, ist eine zentrale Bohrung 10, um die Reibvorrichtung im Paket 1 anordnen zu können, beispielsweise auf einer Welle bzw. einem Zapfen.

Es sei an dieser Stelle erwähnt, dass sowohl die Innenlamelle 2 als auch die Außenlamelle 3 bevorzugt mit Mitnehmern ausgeführt sind, um die Innenlamelle 2 bzw. Außenlamelle 3 verdrehgesichert im Paket 1 anordnen zu können, wie dies an sich bekannt ist. Dazu kann die Innenlamelle 2 in der Bohrung 10 eine Innenverzahnung aufweisen. Die Außenlamelle 3 kann am äußeren Umfang des Lamellenkörpers 9 zumindest teilweise mit einer Außenverzahnung versehen sein. Es sind aber auch andere Mitnehmer(verzahnungen) bekannt, die selbstverständlich an der Reibvorrichtung eingesetzt werden können.

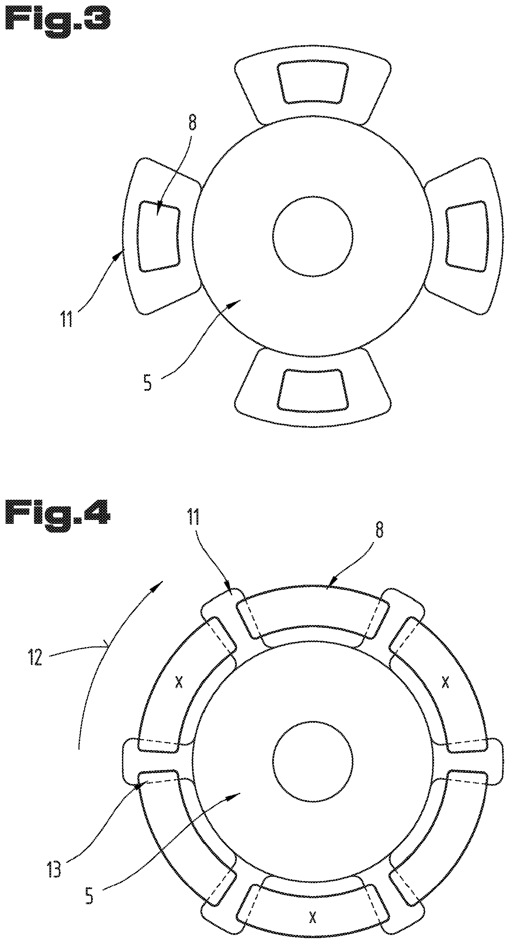

Nach einer anderen nicht erfindungsgemäßen Ausführungsvariante der Reibvorrichtung besteht auch die Möglichkeit, dass über den äußeren Umfang des Trägerelementes 5 verteilt, insbesondere gleichmäßig verteilt, mehrere Befestigungslaschen 11 angeordnet sind, wie dies in Fig. 3 dargestellt ist. Auf diesen Befestigungslaschen 11 sind die Reibbelagsegmente 8 angeordnet, wobei je nach Größe der Befestigungslaschen 11 ein oder mehrere Reibbelagsegmente 8 pro Befestigungslasche 11 angeordnet sein kann/können.

Die Befestigungslaschen 11 können einstückig mit dem Rest des Trägerelementes 5 ausgebildet sein. Es besteht aber auch die Möglichkeit, die Befestigungslaschen 11 als gesonderte Bauteile herzustellen und mit dem Rest des Trägerelementes 5, also dem Innenring, wie dies aus Fig. 3 ersichtlich ist, zu verbinden, beispielsweise zu vernieten.

Bei der Reibvorrichtung nach der Erfindung ist vorgesehen sein, dass die Reibbelagsegmente 8 nicht zur Gänze auf jeweils einer Befestigungslasche 11 angeordnet sind, sondern dass in einer Umfangsrichtung 12 abwechselnd die Reibbelagsegmente 8 und die Befestigungslaschen 11 angeordnet sind, wie dies aus Fig. 4 ersichtlich ist. Dabei existieren Überlappungsbereiche 13 zwischen der Reibbelagsegmenten 8 und den Befestigungslaschen 11 (in der Axialrichtung 4 (Fig. 1) betrachtet), in denen die Reibbelagsegmente 8 mit den Befestigungslaschen verbunden sind.

Mit dieser Anordnung der Befestigungslaschen 11 und der Reibbelagsegmente 8 wird ein aus den Reibbelagsegmenten 8 und den Befestigungslaschen 11 bestehendes und in der Umfangsrichtung 12 durchgehendes Ringelement ausgebildet ist, wie dies ebenfalls aus Fig. 4 ersichtlich ist.

Bei der in Fig. 4 dargestellten Ausführungsvariante der Reibvorrichtung werden also jeweils zwei Befestigungslaschen 11 über ein Reibbelagsegment 8 miteinander in der Umfangsrichtung 12 verbunden. Dabei muss aber nicht zwingend ein durchgehendes Ringelement ausgebildet werden, wie dies voranstehend beschrieben wurde, sondern es können auch Leerstellen vorhanden sein. Beispielsweise kann auch jedes zweite Reibbelagsegment 8 (in der Umfangsrichtung 12 betrachtet) nicht vorhanden sein, z.B. die in Fig. 4 mit "x" gekennzeichneten Reibbelagsegmente 8.

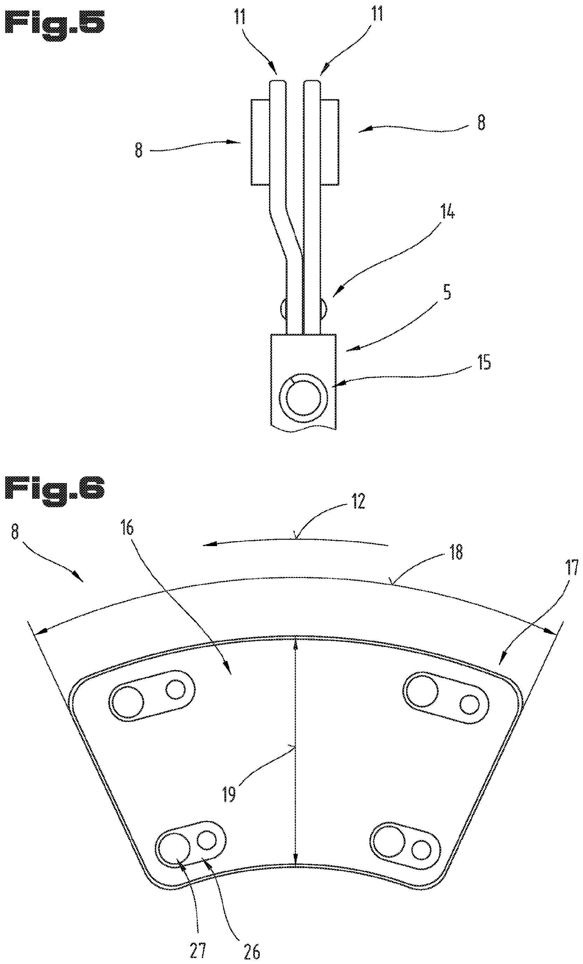

Nach einer Ausführungsvariante der Reibvorrichtung, die ausschnittsweise in Fig. 5 dargestellt ist (auch als Kupplungsscheibe bezeichenbar), besteht die Möglichkeit, dass die Reiblamelle eine starre Seite (in Fig. 5 die rechte Seite) und eine flexible Seite (in Fig. 5 die linke Seite) aufweist. Die starre Seite kann in Form eines ebenen Trägerelementes 5 oder in Form von ebenen Befestigungslaschen 11 ausgeführt sein. Die flexible Seite kann beispielsweise in Form von abgewinkelten Befestigungslaschen 11, sogenannte Belagfederelemente, ausgeführt sein, sodass zwischen den Befestigungslaschen 11 der rechten und der linken Seite ein Abstand ausgebildet ist.

Es sei angemerkt, dass die rechte und die linke Seite der Reibvorrichtung in der Axialrichtung 4 hintereinander ausgebildet sind.

Die abgewinkelten Befestigungslaschen 11 können ebenfalls aus einem Stahl bestehen, beispielsweise einem Federstahl.

Die Befestigungslaschen 11 der rechten und der linken Seite können miteinander verbunden sein, beispielsweise über eine Niet 14, wie dies in Fig. 5 angedeutet ist, oder eine Schraube, etc.. Weiter sind sie mit dem Rest des Trägerelementes 5 verbunden, beispielsweise vernietet oder verschraubt, etc.

Ergänzend sei angemerkt, dass in oder an dem Trägerelement 5 auch Torsionsfedern 15 angeordnet sein können, insbesondere bei der Ausführungsvariante der Reibvorrichtung nach Fig. 5. Die Anordnung von derartigen Torsionsfedern 15 in Kupplungsscheiben ist an sich bekannt, sodass bezüglich weitere Einzelheiten dazu auf den einschlägigen Stand der Technik verwiesen sei.

Wie voranstehend ausgeführt, sind die Reibbelagsegmente 8 mit anorganischen Reibbelägen dafür vorgesehen, organische Reibbeläge zu ersetzen bzw. in Reiblamellen mit "organischem Grundbau" eingesetzt zu werden. Dazu können die Reibbelagsegmente 8 unterschiedlich ausgebildet sein. In den Figuren 6 bis 10 sind dazu einige Beispiele von Reibbelagsegmenten 8 dargestellt.

Organische Reibbeläge werden in Kupplungen immer als geschlossene Ringe ausgeführt, daher werden sind in Kupplungen auch als Reiblamelle bezeichnet. Sinterreibbeläge sind jedoch als Segmente ausgeführt. Aufgrund dieser Voraussetzungen ergeben sich die unterschiedliche Aufbauten zwischen "organischem Grundbau" und "anorganischem Grundbau". Geschlossene Ringe ermöglichen den Einsatz tangential gebogener Belagfederelemente, die bezüglich Anfederung, Tragbild, drehzahlabhängiger geometrischer Verformungen und damit Luftspiel Vorteile bieten. Belagfederelemente bei Sintersegmenten werden vorwiegend radial gebogenen. Ursachen dafür sind Herstellbarkeit, Form, Größe in Kombination der Vernietung vom Reibbelag auf dem Federsegment. Wie voranstehend ausgeführt, ist es mit der Erfindung möglich, anorganische Reibbelagsegmente in einem derartigen "organischem Grundbau" zu verwenden, insbesondere in einem "organischem Grundbau" mit tangential gebogenen Belagfederelementen.

Vorzugsweise jedes Reibbelagsegment 8 der Reibvorrichtung umfasst einen Sinterreibbelag 16 und einen Reibbelagträger 17 bzw. besteht daraus. Es ist aber auch möglich, diese Reibbelagsegmente 8 mit anderen als den in dieser Beschreibung beschriebenen Reibbelagsegmenten zu kombinieren. Beispielsweise kann eine der beiden Seiten der Reibvorrichtung nach Fig. 5 mit anderen als den beschriebenen Reibbelagsegmenten 8 versehen sein.

Im Folgenden wird nur mehr ein Reibbelagsegment 8 beschrieben. Die Ausführungen dazu können aber auf sämtliche Reibbelagsegmente 8 einer Reibvorrichtung oder einer Seite der Reibvorrichtung angewandt werden.

Der Sinterreibbelag 16 ist auf dem Reibbelagträger 17 angeordnet und damit verbunden, beispielsweise aufgesintert oder aufgeklebt. Weiter ist das Reibbelagsegment 5 mit dem Reibbelagträger mit dem Trägerelement 5, insbesondere mit zumindest einer Befestigungslasche 11 (lösbar) verbunden, insbesondere aufgenietet.

Sinterwerkstoffe für Sinterreibbeläge an sich sind ausreichend bekannt, sodass sich Ausführungen dazu erübrigen.

Der Reibbelagträger 17 besteht vorzugsweise aus einem Stahl.

Bei der Reiblamelle weist das Reibbelagsegment 5 eine Winkelabdeckung zwischen 25 ° und 55 °, insbesondere zwischen 30 ° und 50 °, auf. Die Winkelabdeckung ist dabei jener Bereich eines Kreisringes, der einen Winkel 18 in diesem Bereich einschließt. Beispielsweise weist das Reibbelagsegment 8 nach Fig. 6 eine Winkelabdeckung von 50 ° auf, d.h. der Winkel 18 beträgt 50 °.

In der einfachsten Ausführungsvariante des Reibbelagsegmentes 8 ist diese als Kreisringabschnitt ausgeführt, wie dies in Fig. 6 dargestellt ist. Eine radiale Breite 19 des Reibbelagsegmentes 8 ist dabei über die gesamte Erstreckung in der Umfangsrichtung 12 gleichbleibend. Nach Ausführungsvarianten der Reibvorrichtung besteht aber auch die Möglichkeit, dass diese radiale Breite 19 nicht konstant bleibt, also variiert. Dabei können sowohl der Reibbelagträger 17 als auch der Sinterreibbelag 16 eine variierende radiale Breite 17 aufweisen. Es ist aber auch möglich, dass sich nur der Reibbelagträger 17 hinsichtlich seiner radialen Breite 19 im Verlauf der Umfangsrichtung 12 ändert.

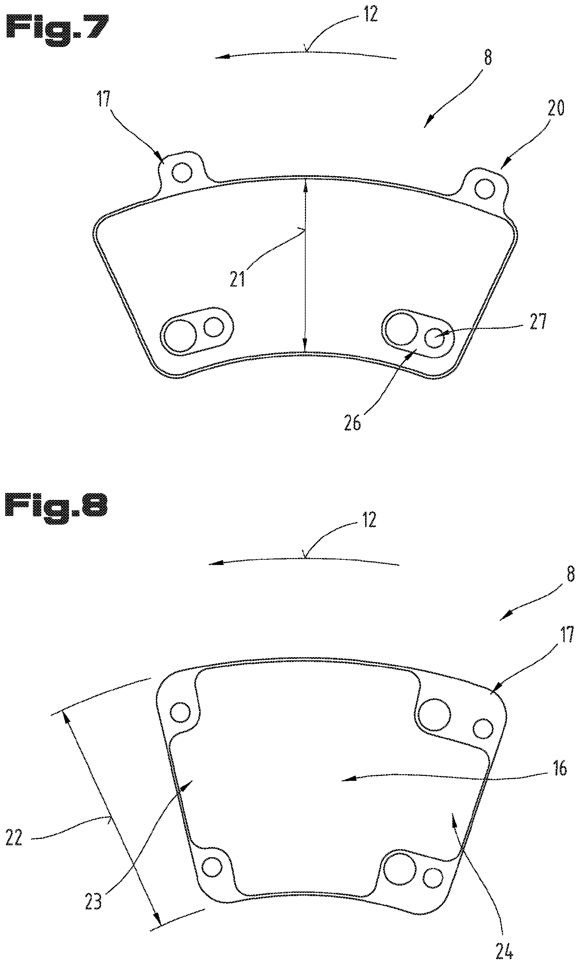

So ist es beispielsweise möglich, dass der Reibbelagträger 17, wie bei dem Reibbelagsegment 8 nach Fig 7, zumindest zwei radial abstehende, insbesondere radial nach außen abstehende Laschen 20 aufweist, die insbesondere einstückig mit dem Rest des Reibbelagträgers 17 ausgebildet sind. Alternativ oder zusätzlich dazu kann der Reibbelagträger 17 ein oder mehrere derartige Laschen 20 auch radial nach innen abstehend und/oder in Umfangsrichtung 12 abstehend aufweisen. Der Sinterreibbelag 16 ist hingegen mit gleichbleibender radialer Belagbreite 21 ausgebildet. Die Laschen 20 dienen der Befestigung der Reibbelagsegmente an dem Trägerelement 5, insbesondere an den Befestigungslaschen 11 des Trägerelementes 5. Somit weist also der Reibbelagträger Befestigungslaschen auf, auf denen keine Reibbeläge angeordnet sind.

Den umgekehrten Fall zeigt Fig. 8. Bei diesem Reibbelagsegment 8 bleibt eine radiale Reibbelagträgerbreite 22 in der Umfangsrichtung 12 unverändert, während die Belagbreite 21 des Sinterreibbelags 16 in der Umfangsrichtung 12 variiert. Konkret weist der Sinterreibbelag 16 zwei in der Umfangsrichtung 12 vorragende laschenartige (flügelartig) Bereiche 23, 24 auf, in denen die Belagbreite 21 kleiner ist als in den restlichen Bereichen des Sinterreibbelages 16. Die radiale Breite des Bereichs 23 kann dabei gleich oder ungleich der radialen Breite des Bereichs 24 sein.

Weiter kann die Längserstreckung in Umfangsrichtung 12 des Bereichs 23 kleiner oder größer sein, als die Längserstreckung in Umfangsrichtung 12 des Bereichs 24.

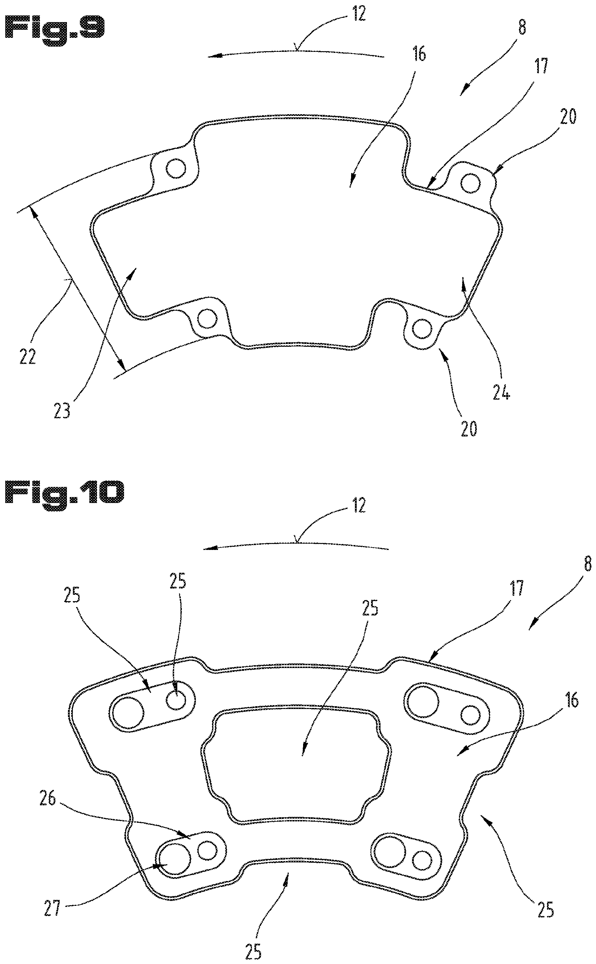

Nach einer Ausführungsvariante dazu können die beiden Bereiche 23, 24 in der Umfangsrichtung 12 aber auch gleich lang sein, wie dies das Reibbelagsegmente 8 nach Fig. 9 zeigt. Zusätzlich zeigt diese Ausführungsvariante des Reibbelagsegments 8 auch sehr schön, dass Kombinationen der einzelnen Ausführungsvarianten der Reibbelagsegmente 8 möglich sind. So weist das Reibbelagsegment 8 nach Fig. 9 Laschen 20 auf, wie dies zu Fig. 7 beschrieben wurde, die noch dazu ungleich groß ausgebildet sein können. Damit kann also auch der Reibbelagträger 17 eine in Umfangsrichtung 12 variierende radiale Reibbelagträgerbreite 22 aufweisen. Der in Fig. 9 links dargestellte Bereich des Reibbelagsegments 8 kann aus der Ausführungsvariante des Reibbelagsegments 8 nach Fig. 8 erhalten werden.

Ergänzend sei angemerkt, dass die Ausführungsvariante des Reibbelagsegments 8 nach Fig. 8 eine Winkelabdeckung von ca. 32 ° aufweist.

Weiter sei angemerkt, dass bei sämtlichen Ausführungsvarianten der Reibbelagsegments 8 die Ecken des Sinterreibbelags 16 und/oder die Ecken des Reibbelagträgers 17 abgerundet sein können, wie dies in den Figuren 6 bis 10 dargestellt ist. Die damit verbundene Änderung der radialen Breite des Sinterreibbelags 16 und/oder des Reibbelagträgers 17 wird aber nicht der voranstehend beschriebenen Änderung der radialen Belagbreite 21 bzw. der Änderung der radialen Reibbelagträgerbreite 22 zugeordnet. Das Reibbelagsegment 8 nach Fig. 6 weist also - wie beschrieben - keine Änderung einer radialen Breite auf.

Nach einer anderen Ausführungsvariante der Reibvorrichtung kann das Reibbelagsegment 8 zumindest eine Ausnehmung 25 im Sinterreibbelag 16 und/oder im Reibbelagträger 17 aufweisen, wie dies u.a. die Fig. 10 zeigt. Die Ausnehmung 25 kann dabei im Bereich des Umfanges des Reibbelagsegmentes 8 sein, wie dies anhand der vier randständigen Ausnehmung in Fig. 10 gezeigt ist. Es ist aber auch möglich, dass die Ausnehmung 25 innerhalb des Sinterreibbelages 16 und/oder des Reibbelagträgers 17 ausgebildet ist, wie dies die Fig. 10 ebenfalls anhand der zentralen Ausnehmung 25 Sinterreibbelag 16 und im Reibbelagträger 17 zeigt.

Dabei ist es möglich, dass die Ausnehmungen 25 im Sinterreibbelag 16 und im Reibbelagträger 17 in der Axialrichtung 4 (Fig. 1) betrachtet übereinanderliegen. Sie können aber auch zueinander versetzt ausgebildet sein, sodass also die Ausnehmung 25 im Reibbelagträger 17 zumindest teilweise von dem Sinterreibbelag 16 abgedeckt sein kann.

Weiter können im Sinterreibbelag 16 Ausnehmungen 25 vorgesehen sein, die größer sind als die Ausnehmungen 25 im Reibbelagträger an der Stelle der Ausnehmungen 25 im Sinterreibbelag 16. Bevorzugt trifft dies auf die Bereiche zu, in denen die Reibbelagsegmente 8 an dem Trägerelement 5 bzw. den Befestigungslaschen 11 (lösbar) befestigt, insbesondere vermietet werden. So können - wie dies die Figuren 6, 7 und 10 zeigen, der Sinterreibbelag 16 in diesen Bereichen mit einem Langloch 26 und der Reibbelagträger 17 mit zumindest einer Bohrung 27 ausgeführt sein. Es ist dabei auch möglich, dass mehr als eine Bohrung 27 pro Langloch 26 vorgesehen wird, beispielsweise zwei, wobei diese Bohrungen 27 einen unterschiedlichen Durchmesser aufweisen können.

Die Ausbildung der Ausnehmung 25 kann so weit gehen, dass der eine Sinterreibbelag 16 pro Reibbelagträger 17 in zumindest zwei getrennte Sinterreibbeläge 16 aufgeteilt wird. Mit anderen Worten ausgedrückt, können pro Reibbelagträger 17 mehr als ein Sinterreibbelag 17, beispielsweise zwei, angeordnet und mit dem Reibbelagträger 17 verbunden sein.

Durch die Ausbildung der zumindest einen Ausnehmung 25 im Sinterreibbelag 16 und/oder im Reibbelagträger 17 kann die Masse des Reibbelagsegments 8 bei gleicher Größe des Reibbelagsegments 8 reduziert werden.

Vorzugsweise weist nach einer Ausführungsvariante der Reiblamelle der Sinterreibbelag eine Flächenausdehnung auf, die um zumindest 5 %, insbesondere zwischen 5 % und 25 %, kleiner ist, als die Flächenausdehnung des Reibbelagträgers 17, jeweils in Draufsicht betrachtet.

Eine Reduktion der Masse des Reibbelagsegments 8 kann alternativ oder zusätzlich dazu auch durch eine Verringerung der Belagstärke des Sinterreibbelages 16 und/oder der Dicke des Reibbelagträgers 17 (jeweils in der Axialrichtung 4 betrachtet) erreich werden.

Die Ausführungsbeispiele zeigen mögliche Ausführungsvarianten der Reibvorrichtung, wobei an dieser Stelle bemerkt sei, dass auch Kombinationen der einzelnen Ausführungsvarianten untereinander möglich sind.

Der Ordnung halber sei abschließend darauf hingewiesen, dass zum besseren Verständnis des Aufbaus das Paket 1 aus Reibvorrichtungen bzw. die Reibvorrichtung nicht notwendigerweise maßstäblich dargestellt sind.

### Bezugszeichenaufstellung

- 1: Paket
- 2: Innenlamelle
- 3: Außenlamelle
- 4: Axialrichtung
- 5: Trägerelement
- 6: Oberfläche
- 7: Oberfläche
- 8: Reibbelagsegment
- 9: Lamellenkörper
- 10: Bohrung
- 11: Befestigungslasche
- 12: Umfangsrichtung
- 13: Überlappungsbereich
- 14: Niet
- 15: Torsionsfeder
- 16: Sinterreibbelag
- 17: Reibbelagträger
- 18: Winkel
- 19: Breite
- 20: Lasche
- 21: Belagbreite
- 22: Reibbelagträgerbreite
- 23: Bereich
- 24: Bereich
- 25: Ausnehmung
- 26: Langloch
- 27: Bohrung

## Patentansprüche

1. Reibvorrichtung mit einem Trägerelement (5) und darauf angeordneten Reibbelagsegmenten (8), wobei die Reibbelagsegmente (8) jeweils einen Sinterreibbelag (16) umfassen, der auf einem Reibbelagträger (17) angeordnet ist, der Reibbelagträger (17) mit dem Trägerelement (5) verbunden ist, und das Trägerelement (5) über den äußeren Umfang verteilt mehrere Befestigungslaschen (11) und/oder Belagfederelemente für die Reibbelagsegmente (8) aufweist, wobei je ein Reibbelagsegment (8) jeweils zwei Befestigungslaschen (11) oder zwei Belagfederelemente in der Umfangsrichtung (12) miteinander verbindet, **dadurch gekennzeichnet, dass** die Reibbelagsegmente (5) eine Winkelabdeckung zwischen 25 ° und 55 ° aufweisen, und dass in der Umfangsrichtung (12) abwechselnd die Reibbelagsegmente (8) und die Befestigungslaschen (11) angeordnet sind, wobei in Überlappungsbereichen (13) - in der Axialrichtung (4) betrachtet - zwischen den Reibbelagsegmenten (8) und den Befestigungslaschen (11) die Reibbelagsegmente (8) mit den Befestigungslaschen (11) verbunden sind.

2. Reibvorrichtung nach Anspruch 1, **dadurch gekennzeichnet, dass** aus den Reibbelagsegmenten (8) und den Befestigungslaschen (11) oder Belagfederelementen ein durchgehendes Ringelement gebildet ist.

3. Reibvorrichtung nach Anspruch 1 oder 2, **dadurch gekennzeichnet, dass** die Reibbelagträger (17) Befestigungslaschen aufweisen, auf denen keine Sinterreibbeläge (16) angeordnet sind.

4. Reibvorrichtung nach einem der Ansprüche 1 bis 3, **dadurch gekennzeichnet, dass** die Reibbelagträger (17) und/oder die Sinterreibbeläge (16) Ausnehmungen (25) aufweisen.

5. Reibvorrichtung nach einem der Ansprüche 1 bis 4, **dadurch gekennzeichnet, dass** die Reibbelagträger (17) mehrere Bohrungen (27) aufweisen, wobei zumindest eine der Bohrungen (27) einen zu den restlichen Bohrungen (27) unterschiedlichen Durchmesser aufweist.

6. Reibvorrichtung nach einem der Ansprüche 1 bis 5, **dadurch gekennzeichnet, dass** die Sinterreibbeläge (16) eine Flächenausdehnung aufweisen, die um zumindest 5 % kleiner ist, als die Flächenausdehnung der Reibbelagträger (17), jeweils in Draufsicht betrachtet.

7. Reibvorrichtung nach einem der Ansprüche 1 bis 6, **dadurch gekennzeichnet, dass** die Sinterreibbeläge (16) mit in Umfangsrichtung (12) abstehenden laschenartigen Bereichen (23, 24) versehen sind.

8. Reibvorrichtung nach einem der Ansprüche 1 bis 7, **dadurch gekennzeichnet, dass** diese als Reiblamelle oder Kupplungsscheibe ausgebildet ist.

9. Paket (1) aus Reibvorrichtungen umfassend in einer Axialrichtung (4) abwechselnd angeordnete Reibvorrichtungen in Form von Außenlamellen (3) und Innenlamellen (2), **dadurch gekennzeichnet, dass** zumindest eine der Reibvorrichtungen nach einem der Ansprüche 1 bis 8 ausgebildet ist.

## Claims

1. A friction device having a carrier element (5) and friction lining segments (8) arranged thereon, wherein the friction lining segments (8) each comprise a sintered friction lining (16), which is arranged on a friction lining carrier (17), the friction lining carrier (17) is connected to the carrier element (5), and the carrier element (5) comprises multiple fastening lugs (11) and/or lining spring elements for the friction lining segments (8) distributed across the outer circumference, wherein the friction lining segments (8) each connect two fastening lugs (11) or two lining spring elements to one another in the circumferential direction (12), **characterized in that** the friction lining segments (5) have an angle coverage between 25° and 55°, and that the friction lining segments (8) and the fastening lugs (11) are arranged alternately in the circumferential direction (12), wherein the friction lining segments (8) are connected to the fastening lugs (11) in overlapping regions (13) between the friction lining segments (8) and the fastening lugs (11) - as viewed in the axial direction (4).

2. The friction device according to claim 1, **characterized in that** a continuous ring element is formed of the friction lining segments (8) and the fastening lugs (11) or lining spring elements.

3. The friction device according to claim 1 or 2, **characterized in that** the friction lining carriers (17) have fastening lugs on which no sintered friction linings (16) are arranged.

4. The friction device according to one of claims 1 to 3, **characterized in that** the friction lining carriers (17) and/or the sintered friction linings (16) have recesses (25).

5. The friction device according to one of claims 1 to 4, **characterized in that** the friction lining carriers (17) have multiple bores (27), wherein at least one of the bores (27) has a diameter differing from that of the remaining bores (27).

6. The friction device according to one of claims 1 to 5, **characterized in that** the sintered friction linings (16) have an areal extent which is smaller by at least 5% than the areal extent of the friction lining carriers (17), in each case as viewed in a top view.

7. The friction device according to one of claims 1 to 6, **characterized in that** the sintered friction linings (16) are provided with lug-like regions (23, 24) projecting in the circumferential direction (12).

8. The friction device according to one of claims 1 to 7, **characterized in that** it is formed as a friction disc or clutch disc.

9. A package (1) of friction devices comprising friction devices in the form of outer discs (3) and inner discs (2) arranged alternately in an axial direction (4), **characterized in that** at least one of the friction devices is designed according to one of claims 1 to 8.

## Revendications

1. Dispositif de friction avec un élément de support (5) et des segments de garniture de friction (8) disposés dessus, dans lequel les segments de garniture de friction (8) comprennent chacun une garniture de friction frittée (16) qui est disposée sur un support de garniture de friction (17), le support de garniture de friction (17) étant relié avec l'élément de support (5) et l'élément de support (5) comprenant plusieurs pattes de fixation (11) et/ou éléments élastiques de garniture, répartis sur la périphérie extérieure, pour les segments de garniture de friction (8), dans lequel chaque segment de garniture de friction (8) relie entre eux deux pattes de fixation (11) ou deux éléments élastiques de garniture dans la direction de la périphérie (12), **caractérisé en ce que** les segments de garniture de friction (5) présentent une couverture angulaire entre 25° et 55° et **en ce que**, dans la direction de la périphérie (12), les segments de garniture de friction (8) et les pattes de fixation (11) sont disposées de manière alternée, dans lequel, dans les zones de superposition (13) - vues dans la direction axiale (4) - entre les segments de garniture de friction (8) et les pattes de fixation (11), les segments de garniture de friction (8) sont reliés avec les pattes de fixation (11).

2. Dispositif de friction selon la revendication 1, **caractérisé en ce que** les segments de garniture de friction (8) et les pattes de fixation (11) ou les éléments élastiques de garniture constituent un élément annulaire continu.

3. Dispositif de friction selon la revendication 1 ou 2, **caractérisé en ce que** les supports de garniture de friction (17) comprennent des pattes de fixation sur lesquelles ne se trouve pas de garniture de friction frittée (16).

4. Dispositif de friction selon l'une des revendications 1 à 3, **caractérisé en ce que** les supports de garniture de friction (17) et/ou les garnitures de friction frittées (16) présentent des évidements (25).

5. Dispositif de friction selon l'une des revendications 1 à 4, **caractérisé en ce que** les supports de garniture de friction (17) présentent plusieurs perçages (27), dans lequel au moins un des perçages (27) présente un diamètre différent des autres perçages (27).

6. Dispositif de friction selon l'une des revendications 1 à 5, **caractérisé en ce que** les garnitures de friction frittées (16) présentent une extension superficielle qui est inférieure d'au moins 5 % par rapport à l'extension superficielle des supports de garniture de friction (17), vus en vue de dessus.

7. Dispositif de friction selon l'une des revendications 1 à 6, **caractérisé en ce que** les garnitures de friction frittées (16) sont munies de parties en forme de pattes (23, 24) qui partent dans la direction de la périphérie (12).

8. Dispositif de friction selon l'une des revendications 1 à 7, **caractérisé en ce que** celui-ci est conçu sous la forme de lamelle de friction ou de disque d'embrayage.

9. Paquet (1) constitué de dispositifs de friction comprenant des dispositifs de friction disposés de manière alternée dans une direction axiale (4), sous la forme de lamelles externes (3) et de lamelles internes (2), **caractérisé en ce qu'**au moins un des dispositifs de friction est conçu selon l'une des revendications 1 à 8.
